# EUROPÄISCHE PATENTSCHRIFT

(11) **EP 2 342 987 B1**
(45) Veröffentlichungstag und Bekanntmachung des Hinweises auf die Patenterteilung: **20.02.2019**
(21) Anmeldenummer: 10015755.1
(22) Anmeldetag: 17.12.2010
(51) Int. Cl.: A43B 17/14, B29D 35/12

(54) **Integrales Dämpf- und Stützelement**
Integrated dampening and support element
Elément d'amortissement et d'appui intégral

(30) Priorität: 23.12.2009 DE 102009060933
(43) Veröffentlichungstag der Anmeldung: 13.07.2011
(73) Patentinhaber: Bauerfeind AG, 07937 Zeulenroda-Triebes (DE)
(72) Erfinder: Panzer, Dominique, 07937 Zeulenroda-Triebes (DE); Jäger, Thorsten, 08527 Plauen (DE); Eibisch, Wolfgang, Dr., 08267 Zwota (DE)
(74) Vertreter: Schwahn, Hartmut

(56) Entgegenhaltungen:
- EP-A1- 1 967 086
- ES-A1- 2 258 373
- GB-A- 2 039 716
- US-A1- 2003 070 321

## Beschreibung

Die Erfindung betrifft das technische Gebiet der orthopädischen Hilfsmittel und Orthesen. Die Erfindung stellt ein verbessertes integrales Formteil zur Verwendung als orthopädisches Dämpf- oder Stützelement sowie Verfahren und Mittel zu dessen Herstellung bereit. Das Formteil enthält einen formlosen Trägerkern, der gezielt abschnittsweise mit mindestens einer insbesondere elastisch aushärtenden Formmasse umgossen ist. Andere Bereiche des Trägerkerns sind nicht mit dieser Formmasse umgossen.

Mehrteilig aufgebaute orthopädische Dämpf- oder Stützelemente für Körperteile sind bekannt. Diese bestehen üblicherweise aus einem formstabilen oder formfesten Trägerkern, der primär die Stützfunktion vermittelt. Dieser ist zur Vermittlung einer Dämpffunktion zumindest einseitig mit einer elastischen Dämpfungsschicht beklebt. Gegebenenfalls werden weitere Dämpf- oder Deckschichten aufgetragen, um die Funktion des Dämpf- oder Stützelements zu verbessern oder deren Anwendbarkeit zu erweitern. Der formstabile Trägerkern wird in der Regel aus Plattenware ausgesägt oder ausgestanzt oder in Form von Halbzeugen bereitgestellt und gegebenenfalls anschließend in eine orthopädisch zweckmäßige Form umgeformt. Als Dämpfschicht dienen üblicherweise gummielastische Matten aus Schaumstoff oder zellfreien Elastomeren, die individuell ausgeschnitten oder ausgestanzt werden. Um den Trägerkern mit der Dämpfschicht zu versehen, muss dieser zur besseren Verklebung gegebenenfalls zunächst durch Rommeln aufgeraut werden. Gegebenenfalls muss der ausgeschnittene Trägerkern noch zusätzlich beschliffen werden und/oder mit einer umlaufenden Fase versehen werden. Anschließend wird der Trägerkern mit Klebstoff benetzt und die Dämpfschicht darauf aufgetragen.

Schwierigkeiten ergeben sich nach dieser bekannten Vorgehensweise dann, wenn zur Herstellung eines orthopädisch zweckmäßigen Dämpf- oder Stützelementes in bestimmten Bereichen des Elementes Zonen höherer oder geringerer mechanischer Festigkeit zur gezielten Unterstützung der Dämpf- oder Stützfunktion vorgesehen werden müssen. Dies kann zum Beispiel im Bereich von Gelenkprotrusionen des zu stützenden Körperteils oder Körpergelenks wie Fersen- oder Zehenballen, Fußknöchel, Handgelenkknöchel, Patella oder Tibiakopf am Kniegelenk oder ähnlichen gewünscht sein. Dadurch werden zusätzliche Verfahrensschritte bei der Herstellung notwendig. So kann vorgesehen sein, dass der Trägerkern an bestimmten Bereichen seiner Oberfläche mit einer anderen Dämpfschicht, die andere mechanische Eigenschaften aufweist, und/oder mit weiteren Schichten beklebt werden muss, um die zonierte oder parzellierte Dämpf- oder Stützfunktion des Elements zu ermöglichen.

Zusätzlich kann erforderlich sein, dass das Element mit einer Deckschicht versehen wird, insbesondere auf der bei der Benutzung dem Körperteil zugewandten Seite. Auch diese Deckschicht muss in einem weiteren Verfahrensschritt auf den Trägerkern und/oder die aufgebrachten Dämpfschichten aufgeklebt werden. Jede weitere Deck- oder Dämpfschicht zur Modifikation der mechanischen Eigenschaften und zur Herstellung der orthopädischen Funktion des Dämpf- oder Stützelements verlangt mindestens einen separaten Verfahrensschritt bei der Herstellung.

Alternative Verfahren sehen im Wesentlichen ein Spritzgießverfahren vor, worin insbesondere ein fester Kern von einer elastischen Formmasse vollständig umschäumt wird. Um eine gezielte parzellierte Dämpf- oder Stützfunktion zu erreichen, muss der umschäumte Kern anschließend in zusätzlichen Arbeitsschritten von der Umschäumung befreit werden.

Die EP 1 967 086 A1 beschreibt Verfahren und Mittel zur Herstellung eines teilweise umschäumten Einlagenkerns

Die Herstellung bekannter mehrteiliger Dämpf- oder Stützelemente ist aufwändig und teuer. Ein im Wesentlichen einschrittiges Verfahren, mit dem ein gebrauchsfertiges Element, das die vorstehend genannten gezielt dämpfenden und stützenden Eigenschaften aufweist, hergestellt werden kann, ist nicht bekannt. Die Herstellung in mehreren Verarbeitungsschritten ist außerdem von der Verwendung mehrerer unterschiedlicher Materialien abhängig, sodass eine gleichbleibende Qualität des hergestellten Dämpf- oder Stützelements beziehungsweise gleichbleibende mechanische Eigenschaften nur unter großem Aufwand und unter Einhaltung einer Vielzahl von Prüf- und Standardisierungsschritten erreicht werden können. Wünschenswert sind deshalb Verfahren und Mittel, welche die Herstellung orthopädischer Dämpf- und Stützelemente erleichtern und vereinfachen und insbesondere die Zahl der notwendigen Verfahrensschritte, die Anzahl und Ausgestaltung der bei der Herstellung zu verwendenden Ausgangsmaterialien und Halbzeuge und insbesondere eine leichter zu erzielende gleichbleibende Produktqualität ermöglichen. Die Erfindung hat sich zur Aufgabe gestellt, Verfahren und Mittel bereitzustellen, mittels derer orthopädische Dämpf- und Stützelemente mittels an sich bekannter Kunststofffertigungsverfahren maschinell automatisch oder halbautomatisch hergestellt werden können, wobei insbesondere auch die mechanischen und orthopädischen Eigenschaften der hergestellten Dämpf- und Stützelemente schnell und einfach modifizierbar und leicht für jede Produktionscharge individuell bestimmbar sind.

Das der Erfindung zugrunde liegende technische Problem wird vollständig gelöst durch die Bereitstellung eines, insbesondere einschrittigen Verfahrens zur Herstellung eines orthopädischen Dämpf- und Stützelements in Form eines integralen Formteils, dass einen formstabilen Trägerkern aufweist, der von Formmasse gezielt abschnittsweise, aber nicht vollständig umgossen ist. Erfindungsgemäß wird dies bevorzugt durch einen einzigen Urformungsschritt erreicht, der zumindest die nachfolgend genannten Teilschritte, die vorzugsweise unmittelbar hintereinander, ohne die Zwischenschaltung weiterer Teilschritte, durchgeführt werden, enthält. Es wird der Trägerkern in ein erfindungsgemäßes Gießwerkzeug eingelegt. Anschließend werden eine oder mehrere plastische Formmassen in das Gießwerkzeug eingeleitet, insbesondere eingespritzt, und zwar derart, dass der Trägerkern von der mindestens einen Formmasse umflossen wird. Erfindungsgemäß ist dem Gießwerkzeug ein Dichtmittel, das in Form einer formelastischen Dichtlippe ausgebildet ist, zugeordnet, welches in Verbindung mit der Anordnung des Trägerkerns in dem Gießwerkzeug das Umfließen mindestens eines Oberflächenabschnitts des Trägerkerns mit der mindestens einen Formmasse verhindert. Die Formmasse wird an dem Trägerkern ausgehärtet, sodass ein gezielt abschnittsweise mit der Formmasse umgossener Trägerkern als integrales Formteil erhalten wird.

Die Erfindung sieht also vor, ein integrales Formteil herzustellen, das unmittelbar, ohne weitere Verarbeitungsschritte als orthopädisches Dämpf- und/oder Stützelement eingesetzt werden kann. Unter einem integralen Formteil wird vorliegend ein im Wesentlichen einstückig gefertigtes Formteil verstanden, das sowohl gezielt mechanisch stützende als auch gezielt dämpfende Eigenschaften aufweist. Dies wird erfindungsgemäß dadurch erreicht, dass ein im Wesentlichen formstabiler, mechanisch fester Trägerkern von einer im Wesentlichen gummielastischen aushärtenden Formmasse in einem Gießprozess, der in einem Gießwerkzeug stattfindet, zu einer integralen einstückigen Einheit umgossen wird. Dabei ist erfindungsgemäß vorgesehen, dass der Trägerkern nicht entlang seiner gesamten Oberfläche mit der zumindest einen plastischen Formmasse umflossen wird, sondern vielmehr mindestens ein Oberflächenabschnitt an dem Trägerkern gegen das Umfließen mit dieser Formmasse abgedichtet wird und insbesondere mit dieser Formmasse zu keinem Zeitpunkt der Herstellung in Kontakt kommt.

Die Erfinder fanden überraschend, dass mittels des erfindungsgemäßen Gießverfahrens ein formstabiler Trägerkern derart mit einer elastischen Formmasse umgossen werden kann, dass gezielt Oberflächenabschnitte des Trägerkerns von mindestens einer Formmasse frei bleiben, das heißt, von dieser nicht umflossen werden, sodass ein Formteil erhalten werden kann, welches gezielte mechanische Eigenschaften aufweist und so als orthopädisches Dämpf- oder Stützelement, beispielsweise in Form einer Pelotte für eine Orthese oder in Form einer orthopädischen Einlage für einen Schuh, eingesetzt werden kann. Es lassen sich in einem einzigen Urformungsschritt integrale, insbesondere teilelastische Formteile erzeugen, die nebeneinander mindestens eine Zone höherer und geringerer mechanischer Resistenz oder Dämpfung aufweisen. So kann ohne weiteres gezielt die Dämpf- beziehungsweise Stützfunktion des Formteils des Produkts verbessert werden. Auf diese Weise kann im Wesentlichen in einem einzigen Arbeitsschritt durch Verwendung mindestens zweier plastischer Formmassen, die zumindest im ausgehärteten Endzustand unterschiedliche physikalische und/oder mechanische Eigenschaften aufweisen, ein integrales Produkt erhalten werden, welches gezielt abgegrenzte Zonen unterschiedlicher, mechanischer Eigenschaften aufweist. Durch die Wahl der jeweils eingesetzten Formmasse zum Umgießen des Trägerkerns kann der Herstellungsprozess leicht angepasst werden, wenn ein Produkt mit anderen Dämpf- und/oder Stützfunktionen erhalten werden soll. Dazu braucht das Gießwerkzeug in seiner Ausgestaltung nicht geändert werden.

Die Erfindung sieht vor, dass an dem zur Herstellung des Formteils eingesetzten Gießwerkzeug, zumindest an einem Element des Gießwerkzeugs, mindestens ein Dichtelement zur Abdichtung eines Oberflächenabschnitts des darin eingelegten Trägerkerns vorgesehen ist, wobei das Dichtmittel in Form einer formelastischen Dichtlippe, vorzugsweise als in das Gießwerkzeug integrierte, umlaufende Elastomerdichtung, ausgebildet ist. In einer bevorzugten Variante ist vorgesehen, dass diese Dichtlippe in der Form an unterschiedlichen Positionen in dem Gießwerkzeug eingelegt oder positioniert werden kann, sodass es ohne aufwändigen Wechsel des gesamten Gießwerkzeugs möglich ist, die Oberflächenabschnitte je nach geforderter mechanischer Eigenschaft des herzustellenden integralen Formteils gegen Formmasse abzudichten.

In einer bevorzugten Variante des erfindungsgemäßen Verfahrens ist vorgesehen, dass der Trägerkern in zumindest einem Oberflächenabschnitt von dem Dichtmittel abgedichtet wird, dass der Trägerkern beim Einleiten der mindestens einen plastischen Formmasse in einem ersten Oberflächenabschnitt mit mindestens einer (ersten) Formmasse umflossen wird und mindestens ein durch das Dichtmittel abgetrennter/abgedichteter Oberflächenabschnitt nicht von der Formmasse umflossen wird, das heißt von der Formmasse frei bleibt, insbesondere also nicht mit der Formmasse in Kontakt tritt. Auf diese Weise kann ein integrales Formteil erhalten werden, indem der Trägerkern über zumindest einen ersten Oberflächenabschnitt mit Formmasse umgossen ist und in zumindest einem weiteren Oberflächenabschnitt nicht mit Formmasse umgossen ist. Dadurch kann gezielt die Dämpf- und/oder Stützfunktion des integralen Formteils bewirkt werden.

In einer alternativen Variante des erfindungsgemäßen Verfahrens ist vorgesehen, dass der Trägerkern in einem ersten Oberflächenabschnitt mit einer ersten Formmasse umflossen wird und mindestens ein durch das Dichtmittel abgetrennter weiterer Oberflächenabschnitt mit mindestens einer weiteren Formmasse, die sich von der ersten Formmasse in bevorzugt im physikalischen und/oder mechanischen Eigenschaften, oder alternativ und bevorzugt zusätzlich in Farbgebung und/oder Struktur, unterscheidet, umflossen wird. Auf diese Weise kann ein integrales Formteil erhalten werden, worin der Trägerkern über zumindest einen ersten Oberflächenabschnitt mit einer ersten Formmasse und über mindestens einen weiteren Oberflächenabschnitt mit einer zweiten oder weiteren Formmasse umgossen ist. Auf diese Weise kann ebenfalls ein Produkt erhalten werden, worin die Dämpf- und Stützfunktion gezielt ausgebildet sind.

In einer bevorzugten Ausgestaltung des Verfahrens ist außerdem vorgesehen, dass in das Gießwerkzeug zusammen mit dem Trägerelement mindestens eine Deckschicht eingelegt wird, wobei das bevorzugt mehrteilig ausgebildete Gießwerkzeug für den Gießvorgang mit der mindestens einen Formmasse derart geschlossen wird, dass die Formmasse bevorzugt zwischen Trägerkern und Deckschicht fließen kann und beim Aushärten die elastische Formmasse die Deckschicht mit dem Trägerkern dauerhaft elastisch verbindet. Auf diese Weise kann in einem im Wesentlichen einzigen Urformungsschritt aus den Halbzeugen formfester Trägerkern und Deckschicht in Verbindung der mindestens einen elastisch aushärtenden Formmasse ein integrales Formteil hergestellt werden, das unmittelbar als orthopädisches Dämpf- oder Stützelement eingesetzt werden kann. Weitere Verarbeitungsschritte, wie das gezielte Abtragen von umschäumten Abschnitten oder das nachträgliche Aufkleben von Deckschichten, erübrigen sich.

Vorliegend wird unter eine "Deckschicht" eine insbesondere flexible Schicht verstanden, die insbesondere den Abschluss des integralen Formteils bildet, der bei der zweckgemäßen Verwendung des Formteils als Dämpf- oder Stützelement zum Körperteil oder Körpergelenk weist. Eine Deckschicht kann vorgesehen sein, um beispielsweise die Hautverträglichkeit und/oder die Haft- oder Gleiteigenschaften zwischen orthopädischem Dämpf- oder Stützelement und dem zu dämpfenden oder zu stützenden Körperteil oder Körpergelenk zu verbessern. Eine das integrale Formteil abschließende Deckschicht kann auch ein Verbindungselement zu weiteren Dämpf- oder Stützelementen, beispielsweise weitere Pelotten, bilden. Weiter kann die Deckschicht als Verbindungsschicht zur nachträglichen Verbindung mit einer Orthese, beispielsweise als Klettverbindung, ausgebildet sein.

Wesentliche Vorteile des erfindungsgemäßen Verfahrens und der dazu vorgesehenen Mittel sind die wesentliche Verringerung der Anzahl der Fertigungsschritte und damit der Kosten bei der Herstellung des orthopädischen Dämpf- oder Stützelements. Gleichzeitig ist es vorteilhafterweise möglich, dreidimensional geformte formstabile Trägerkerne in Form von Halbzeugen vorzufertigen, die von ihrer Formgebung bisher nicht der bekannten Verklebung mit einer oder mehreren Dämpfschichten zugänglich waren. Durch die Erfindung lassen sich weitere, bisher nicht bekannte Materialkombinationen ermöglichen. Ein weiterer Vorteil ist dabei die thermische Verformbarkeit des umgossenen formstabilen Trägerkerns zur individuellen Anpassung des zunächst als Serienprodukt hergestellten teilelastischen Formteils durch den Orthopädietechniker oder Orthopädieschuhtechniker. Der erfindungsgemäße Aufbau des Formteils macht ein "Zerlegen" des Dämpf- oder Stützelements durch Entfernen von Bezügen, textilen Trägern, Dämpfschichten, Stützelementen, Stäben, Polsterungen etc. überflüssig.

Die Erfindung sieht vorzugsweise vor, dass nicht nur indikationsbezogen bestimmte Stellen des Formteils von elastischem Material ausgespart werden, sondern dass auch gezielt partiell zusätzliches dämpfendes Material im einzigen Arbeitsschritt aufgetragen wird.

Die Erfindung sieht weiter vor, dass beim Urformungsvorgang definiert verschiedene Formmassen definierter Härtegrade eingespritzt werden. Daneben lassen sich während des Urformungsvorgangs zusätzlich Pelotten oder andere Befestigungsmittel, insbesondere zur nachträglichen individuellen Befestigung von weiteren Dämpf- oder Stützelementen, vorzugsweise Pelotten, ermöglicht. So kann zum Beispiel in einer bevorzugten Ausführungsform vorgesehen sein, dass bei dem Urformungsvorgang zusätzlich mindestens ein Befestigungsmittel über mindestens eine elastische Formmasse mit dem Trägerkern derart verbunden wird, dass in dem ausgeformten integralen Formteil nachträglich individuell bestimmte Pelottenformen angebracht werden können. Ein solches Befestigungsmittel ist vorzugsweise ein angeschäumter Klettpunkt. Bei einer therapeutischen Anwendung des erfindungsgemäßen Dämpf- oder Stützelements kann dann an diesem Befestigungsmittel individuell je nach Genesungsfortschritt ein bestimmtes Dämpfungselement, vorzugsweise eine Pelotte mit gezielt an den Genesungsfortschritt angepasstem Umfang, angebracht werden. Wahlweise können für die Verwendung bei verschiedenen Bewegungszuständen oder Sportarten entsprechend angepasste zusätzliche Dämpfungselemente, vorzugsweise Pelotten, an dem erfindungsgemäßen integralen Formteil angebracht werden.

Aufgrund der verwendbaren Materialien kann außerdem eine längere Haltbarkeit der Dämpf- oder Stützelemente erreicht werden. Durch die Herstellung des Formteils in einem Gießwerkzeug durch Umfließen eines formstabilen Trägerkerns mit mindestens einer plastischen Formmasse, die erfindungsgemäß aushärtet, ergibt sich eine innige Verbindung der Komponenten des Formteils. Einer Delamination der verschiedenen Schichten, beispielsweise durch dauernde mechanische und physikalisch-chemische Einwirkungen, wie dies im Bereich von Einlegesohlen vorkommen kann, wird vorteilhafterweise vermieden. So ist beispielsweise bekannt, dass sich bei individuell aus Schichten zusammengeklebten Dämpf- oder Stützelementen, beispielsweise bei orthopädischen Einlegesohlen, bei der Verwendung, beispielsweise also im Schuh, durch schwierige mechanische und physikalische Verhältnisse, Wärme, Druck, seitliche Scherkräfte, Feuchtigkeit, Verklebungen lösen. Dies wird durch die dauerhafte Verbindbarkeit des formfesten Trägerkerns mit der mindestens einen elastisch aushärtenden Formmasse vorteilhaft vermieden.

Durch die innige Verbindbarkeit von formfestem Trägerkern mit der mindestens einen elastisch aushärtenden Formmasse und gegebenenfalls mit Deckschicht und/oder einem weiteren Verbindungsmittel kann ein integrales Formteil erhalten werden, worin alle Elemente zu einer integralen Einheit zusammengefügt sind. Dies erlaubt auch ein nachträgliches individuelles Anpassen des integralen Formteils, beispielsweise durch den Orthopädietechniker durch individuelles, insbesondere thermisches Umformen des umgossenen formfesten Trägerkerns innerhalb des integralen Formteils, ohne dass dadurch das Formteil zerstört wird oder die Einzelkomponenten aufgetrennt werden müssen. Eine einfache Nachbearbeitbarkeit des erfindungsgemäß automatisch vorfertigbaren integralen Formteils ist somit gegeben.

Bevorzugt werden Integralschaumstoffe, insbesondere aus PUR (PUR-I), eingesetzt und der formstabile Trägerkern in dem geschlossenen Gießwerkzeug durch Formverschäumung umschäumt. Bevorzugt wird dazu das flüssige, hochaktive Reaktionsgemisch in das geschlossene Gießwerkzeug injiziert. Bevorzugt ist vorgesehen, durch die Zusammensetzung des Reaktionsgemisches und/oder durch die Werkzeugtemperatur die Schaumbildung so zu steuern, dass die Formteile einen zelligen Kern und eine im Wesentlichen zellfreie Randzone aufweisen. Bevorzugt stellt sich dabei ein kontinuierlicher Übergang zwischen Randzone und Kern ein. Bevorzugt wird die Technik des Reaktionsschaumgusses (REM) eingesetzt. Bevorzugt weisen die Integralschaumstoffe eine Dichte von 0,4 bis 0,6 g/cm³ auf.

Bevorzugt wird in dem erfindungsgemäßen Verfahren eine Formmasse eingesetzt, die gummielastisch aushärtet. Bevorzugt ist ein Integralschaumstoff. Alternativ bevorzugt ist ein zellfrei aushärtendes Elastomer.

Bevorzugt härten die eingesetzten Formmassen mit einer Shore A-Härte von 30 bis 80, bevorzugt von 50 bis 80, auf.

Die formfesten Trägerkerne können in an sich bekannter Weise ausgebildet sein. In einer bevorzugten Ausgestaltung ist der formfeste Trägerkern ein Spritzgussteil. Bevorzugt sind thermoplastische, insbesondere schlagzähe Materialen. Bevorzugt sind Polyethylen, Polypropylen, Polyurethan und insbesondere Ethylenvinylacetat (EVA) sowie Mischungen aus diesen Komponenten.

Um die Verbindung des formfesten Trägerkerns mit der mindestens einen Formmasse zu verbessern, kann vorgesehen sein, dass der Trägerkern an seiner Oberfläche mit geeigneten Mitteln chemisch oder mechanisch vorbehandelt ist, beispielsweise durch Anrauen oder Anätzen. Weiter können an dem Trägerkern chemische Beschichtungen, beispielsweise Kleber oder Polymerisationsaktivatoren aufgebracht sein, die eine innigere Verbindung des Trägerkerns mit der Formmasse an den von der Formmasse umflossenen Oberflächenabschnitten des Trägerkern ermöglichen. Daneben kann vorgesehen sein, dass der Trägerkern an seiner Oberfläche zumindest abschnittweise mit chemischen Mitteln versehen ist, die, insbesondere beim Umgießen in dem Gießwerkzeug, ein Benetzen des Trägerkerns mit der mindestens einen Formmasse an dieser Stelle gezielt verhindern. Unter chemischen Mitteln werden vorliegend auch nanopartikuläre Strukturen (Lotoseffekt) verstanden.

Um zu gewährleisten, dass bei dem erfindungsgemäßen Gießvorgang der abzudichtende Oberflächenabschnitt an dem in das Gießwerkzeug eingelegten Trägerkern durch das Dichtmittel gegen Umfließen mit Formmasse sicher abgedichtet ist, ist bevorzugt vorgesehen, dass der in das Gießwerkzeug eingelegte Trägerkern an das Dichtmittel zusätzlich mechanisch angepresst wird. In einer ersten Ausgestaltungsvariante erfolgt dies durch mechanische Interaktion des eingelegten Trägerkerns mit einem zumindest zweiteiligen Gießwerkzeug, das zur Durchführung des Gießprozesses über dem eingelegten Trägerkern dicht geschlossen wird. Beispielsweise kann vorgesehen sein, dass eine untere Hälfte des Gießwerkzeugs das Dichtmittel aufweist, worauf in einem ersten Teilschritt der zu umgießende Trägerkern eingelegt wird und anschließend das Gießwerkzeug mittels einer oberen zweiten Hälfte geschlossen wird, wobei die obere zweite Hälfte Mittel aufweist, insbesondere Stifte oder Stege, die den eingelegten Trägerkern auf das untere Dichtmittel aufpressen, um so die Dichtigkeit zu erreichen oder zu verbessern.

In einer alternativen und/oder zusätzlichen Variante wird der eingelegte Trägerkern an dem Dichtmittel mittels Vakuum angepresst. Bevorzugt ist dazu vorgesehen, dass ein erstes Vakuum zwischen anzupressendem Trägerkern und dem durch das Dichtmittel abzudichtenden Volumen angelegt wird. Bevorzugt ist dabei ein erstes Vakuum (Hilfsvakuum) vorgesehen, mittels dessen der Trägerkern auf das Dichtmittel abgesenkt wird, und anschließend der Trägerkern über ein zweites Vakuum (Hauptvakuum) dichtend an das Dichtmittel angepresst wird.

In einer bevorzugten Ausgestaltung ist vorgesehen, dass das Hilfsvakuum ein bevorzugt in dem erfindungsgemäßen Gießwerkzeug vorgesehenes Mittel bedient, welches den in das Gießwerkzeug eingelegten Trägerkern stützt oder aufnimmt und in einem ersten Teilschritt an das Dichtmittel anlegt. Ein solches Mittel ist vorzugsweise ein Vakuumbalg, der den Trägerkern ansaugt und an das Dichtmittel, bevorzugt an eine Dichtlippe anlegt.

Bevorzugt ist vorgesehen, dass der Trägerkern keine zusätzlichen Mittel zur Erzielung der Dichtheit aufweist. In diesem Fall ist der Trägerkern mit einer im Wesentlichen glatten Oberfläche ausgestaltet, die ein Abdichten mittels Elastomerdichtungen ermöglicht. In einer alternativen Variante ist der Trägerkern so ausgestaltet, dass er in dem abzudichtenden Bereich Strukturen aufweist, die mit den in dem Gießwerkzeug vorgesehenen Dichtmittelstrukturen dichtend in Eingriff kommen können. In einer weiteren alternativen Variante weist der Trägerkern an seiner Oberfläche, zumindest in dem abzudichtenden Bereich, eine zusätzliche chemische oder physikalische Beschichtung auf, die die Abdichtung mit dem in dem Gießwerkzeug vorgesehenen Dichtmittel verbessert. In einer weiteren Variante ist das Dichtmittel in dem Gießwerkzeug so ausgestaltet, dass es in Bezug auf den abzudichtenden Oberflächenabschnitt des einzulegenden Trägerkerns keine konkrete Formfestlegung enthält. Vielmehr ergibt sich in diesem Fall die Festlegung des abzudichtenden Bereiches an dem Trägerkern allein aus einer in dem Trägerkern vorgesehenen Oberflächenstruktur, zum Beispiel einer vorspringenden umlaufenden Federstruktur, die mit einem elastomerisch ausgebildeten, insbesondere unstrukturierten Bereich des Gießwerkzeugs in Eingriff kommt. Auf diese Weise kann die Gestaltung des abzudichtenden Oberflächenbereichs geändert werden, ohne dass jegliche Änderungen an dem Gießwerkzeug vorgenommen werden müssen. Vielmehr bestimmt die Oberflächenstruktur und -gestaltung des in das Gießwerkzeug eingelegten Trägerkerns unmittelbar den am Trägerkern gegen das Umfließen mit elastischer Formmasse abzudichtenden Oberflächenabschnitt.

In einer alternativen Variante zur Herstellung der gezielt abschnittsweise mit elastischer Formmasse umgossenen Trägerkerne ist vorgesehen, den Trägerkern vor oder nach dem Einlegen in das Gießwerkzeug gezielt, das heißt abschnittsweise und/oder zonenweise, mit der Formmasse, insbesondere mit einem Reaktionsgemisch zur Herstellung eines Integralschaumstoffs, zu besprühen oder zu imprägnieren und anschließend durch Schließen des Gießwerkzeugs, bevorzugt unter Temperatureinwirkung, aufzuschäumen. Dabei unterstützt das abschnittsweise Aufbringen der Formmasse beziehungsweise des Reaktionsgemisches das abschnittweise Umgießen oder Umschäumen des zentralen Trägerkerns.

Gegenstand der Erfindung ist auch ein integrales orthopädisches Dämpf- und/oder Stützelement, das einen im Wesentlichen formstabilen Trägerkern aufweist, der von einer oder mehreren gummielastisch ausgehärteten Formmassen gezielt abschnittsweise umgossen und mit dieser innig verbunden ist. Dieser ist unmittelbar herstellbar gemäß dem vorgenannten erfindungsgemäßen Verfahren. Bevorzugt ist das erfindungsgemäße integrale oder orthopädische Dämpf- und/oder Stützelement eine Pelotte, insbesondere zum Einsatz in einer Orthese. In einer alternativen Ausgestaltung ist das orthopädische Stützelement eine orthopädische Schuheinlage. Der Fachmann kennt weitere Ausgestaltungen bekannter orthopädischer Dämpf- und Stützelemente, die das erfindungsgemäße integrale Dämpf- und/oder Stützelement verbessert weiterbildet.

Demgemäß ist ein weiterer Gegenstand der Erfindung eine verbesserte Orthese, welches zumindest ein erfindungsgemäßes, beziehungsweise erfindungsgemäß herstellbares integrales Dämpf- und/oder Stützelement enthält oder im Wesentlichen daraus besteht.

Ein weiterer Gegenstand der Erfindung ist schließlich auch ein Mittel zur Herstellung des erfindungsgemäßen integralen Dämpf- und/oder Stützelements, insbesondere nach dem vorbeschriebenen erfindungsgemäßen Verfahren. Dieses Mittel ist ein Gießwerkzeug zur Herstellung eines insbesondere teilelastischen Formteils aus einem mit mindestens einer gummielastischen Formmasse gezielt abschnittsweise umgossenen formstabilen Trägerkern, wobei das Gießwerkzeug vor allem dadurch gekennzeichnet ist, dass es mindestens ein Dichtmittel aufweist, das mit einem in das Gießwerkzeug einlegbaren Trägerkern dichtend in Eingriff oder Kontakt gebracht werden kann, um mindestens einen Oberflächenabschnitt des Trägerkerns gegen das Umgießen mit mindestens einer in das Gießwerkzeug einbringbaren Formmasse abzudichten. Erfindungsgemäß weist das Gießwerkzeug als Dichtmittel mindestens eine in dem Gießwerkzeug angeordnete umlaufende, bevorzugt elastische Dichtlippe auf, die an dem in das Gießwerkzeug einlegbaren Trägerkern abdichtend anlegbar ist. In einer Variante ist das Dichtmittel durch mindestens eine in dem Gießwerkzeug vorgesehene umlaufende Nut oder Feder gebildet, die vorzugsweise mit einer komplementären Nut oder Feder des an dem in das Gießwerkzeug einlegbaren Trägerkerns dichtend in Eingriff gebracht werden kann.

Die Erfindung wird durch die nachfolgenden Figuren und Beispiele näher illustriert, ohne dass diese beschränkend zu verstehen wären.

Die Figuren zeigen:

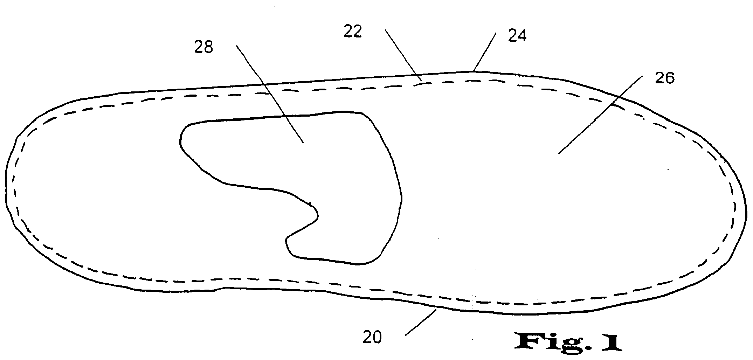

Figur 1 Draufsicht auf die Unterseite eine erfindungsgemäßen teilelastischen Formteils, das beispielhaft in Form einer Einlegesohle ausgebildet ist. Das Formteil (20) weist einen innen liegenden Trägerkern (22) auf, der teilweise von einer gummielastischen Formmasse (24) umgossen ist. Es grenzt sich ein umgossener erster Oberflächenabschnitt (26) von einem von der Formmasse nicht umgossenen freien Oberflächenabschnitt (28) ab.

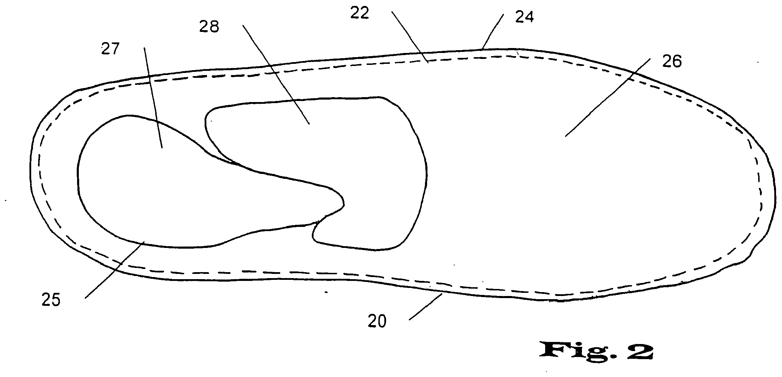

Figur 2 zeigt die Draufsicht auf eine weitere Variante des erfindungsgemäßen teilelastischen Formteils, das beispielhaft in Form einer Einlegesohle ausgebildet ist. Der innere formstabile Trägerkern (22) ist von einer ersten gummielastischen Formmasse (24) und einer zweiten gummielastischen Formmasse (25) umgossen. Der von der ersten Formmasse (24) umgossene erste Abschnitt (26) des Trägerkerns weist andere mechanische Eigenschaften, insbesondere eine andere Shore A-Härte auf als der von der zweiten Formmasse (25) umgossene zweite Abschnitt (27) des Trägerkerns.

## Patentansprüche

1. Verfahren zur Herstellung eines teilelastischen Formteils (20) mit formstabilem Trägerkern (22), enthaltend die Schritte:
- Einlegen des Trägerkerns (22) in ein Gießwerkzeug;
- Einleiten mindestens einer plastischen Formmasse (24) in das Gießwerkzeug, sodass der Trägerkern (22) von der mindestens einen Formmasse (24) umflossen wird, und der Trägerkern (22) in dem Gießwerkzeug so angeordnet ist, dass ein dem Gießwerkzeug zugeordnetes Dichtmittel das Umfließen eines Oberflächenabschnitts (27, 28) des Trägerkerns (22) mit mindestens einer Formmasse (24) verhindert; und
- Aushärtenlassen der Formmasse (24) an dem Trägerkern (22), sodass ein gezielt abschnittsweise mit Formmasse (24) umgossener Trägerkern (22) als Formteil (20) erhalten wird,
**dadurch gekennzeichnet, dass** ein als formelastische Dichtlippe ausgebildetes Dichtmittel das Umfließen eines Oberflächenabschnitts (27, 28) des Trägerkerns (22) mit mindestens einer Formmasse (24) verhindert.

2. Verfahren nach Anspruch 1, wobei der Trägerkern (22) in einem ersten Oberflächenabschnitt (26) mit einer Formmasse (24) umflossen wird und ein durch das Dichtmittel abgetrennter weiterer Oberflächenabschnitt (28) von der Formmasse (24) frei bleibt.

3. Verfahren nach Anspruch 1, wobei der Trägerkern (22) in einem ersten Oberflächenabschnitt (26) mit einer ersten Formmasse (24) umflossen wird und ein durch das Dichtmittel (12) abgetrennter weiterer Oberflächenabschnitt (27) mit einer weiteren Formmasse, die sich von der ersten Formmasse (24) in physikalischen und/oder mechanischen Eigenschaften unterscheidet, umflossen wird.

4. Verfahren nach einem der Ansprüche 1 bis 3, wobei die Formmasse (24) ein gummielastisch aushärtender Integralschaumstoff ist.

5. Verfahren nach einem der Ansprüche 1 bis 3, wobei die Formmasse (24) ein gummielastisch aushärtendes zellfreies Elastomer ist.

6. Verfahren nach einem der vorstehenden Ansprüche, wobei der Trägerkern (22) in dem Gießwerkzeug mit zumindest dem abzudichtenden Oberflächenabschnitt (27, 28) an das Dichtmittel angepresst wird.

7. Verfahren nach Anspruch 6, wobei das Anpressen an das Dichtmittel durch Anlegen von Unterdruck zwischen Gießwerkzeug und Trägerkern im Bereich des Dichtmittels erfolgt.

8. Orthopädisches Stützelement (20) enthaltend einen formstabilen Trägerkern (22), der von mindestens einer gummielastischen Formmasse (24) gezielt abschnittsweise umgossen und mit dieser innig verbunden ist, unmittelbar herstellbar nach dem Verfahren nach einem der vorstehenden Ansprüche.

9. Orthopädisches Stützelement (20) nach Anspruch 8, herstellbar ohne Abtragen von umschäumten Abschnitten.

10. Orthopädisches Stützelement (20) nach Anspruch 8 oder 9, das eine orthopädische Schuheinlage ist.

11. Orthese, enthaltend das orthopädische Stützelement (20) nach einem der Ansprüche 8 bis 10.

12. Gießwerkzeug (10) zur Herstellung eines teilelastischen Formteils (20) aus einem mit gummielastischer Formmasse (24) gezielt abschnittsweise umgossenen formstabilen Trägerkern (22), und das Gießwerkzeug mindestens ein Dichtmittel aufweist, das mit dem in das Gießwerkzeug einlegbaren Trägerkern (22) einen Oberflächenabschnitt (27, 28) des Trägerkerns (22) gegen eine Formmasse (24) abdichtend in Eingriff oder Kontakt gebracht werden kann, **dadurch gekennzeichnet, dass** das Dichtmittel als formelastische Dichtlippe ausgebildet ist.

13. Gießwerkzeug nach Anspruch 12, wobei das Dichtmittel eine in dem Gießwerkzeug angeordnete umlaufende Dichtlippe ist, die an den in das Gießwerkzeug einlegbaren Trägerkern (22) abdichtend anlegbar ist.

14. Gießwerkzeug nach Anspruch 12, wobei das Dichtmittel durch mindestens eine in dem Gießwerkzeug vorgesehene umlaufende Nut oder Feder gebildet wird, die mit einer komplementären Nut oder Feder an dem in das Gießwerkzeug einlegbaren Trägerkern (22) abdichtend in Eingriff gebracht werden kann.

15. Gießwerkzeug nach einem der Ansprüche 12 bis 14, wobei das Gießwerkzeug zusätzlich Mittel zum Anpressen des in das Gießwerkzeug einlegbaren Trägerkerns (22) an das Dichtmittel aufweist.

## Claims

1. A method for producing a semi-elastic moulded article (20) with a rigid carrier core (22), the method comprising the steps:
- inserting the carrier core (22) into a casting tool;
- injecting at least one plastic moulding compound (24) into the casting tool such that the at least one moulding compound (24) flows around the carrier core (22), and that the carrier core (22) is arranged in the casting tool in such a way that a sealing means associated with the casting tool prevents at least one moulding compound (24) from flowing around a surface portion (27, 28) of the carrier core (22); and
- allowing the moulding compound (24) to cure at the carrier core (22) such that a carrier core (22) selectively encapsulated in portions by the moulding compound (24) is obtained as the moulded article (20),
**characterised in that** a sealing means configured as a flexible sealing lip prevents at least one moulding compound (24) from flowing around a surface portion (27, 28) of the carrier core (22).

2. The method according to claim 1, wherein a moulding compound (24) flows around the carrier core (22) in a first surface portion (26), and another surface portion (28) separated by the sealing means remains free from the moulding compound (24).

3. The method according to claim 1, wherein a first moulding compound (24) flows around the carrier core (22) in a first surface portion (26), and another moulding compound differing from the first moulding compound (24) in its physical and/or mechanical properties flows around another surface portion (27) separated by the sealing means (12).

4. The method according to any one of claims 1 to 3, wherein the moulding compound (24) is a rubber-elastically curing integral foam plastic.

5. The method according to any one of claims 1 to 3, wherein the forming compound (24) is a rubber-elastically curing cell-free elastomer.

6. The method according to any one of the preceding claims, wherein the carrier core (22) in the casting tool is pressed against the sealing means with at least the surface portion (27, 28) to be sealed off.

7. The method according to claim 6, wherein the pressing against the sealing means is effected by applying a negative pressure between the casting tool and the carrier core in the region of the sealing means.

8. An orthopaedic support element (20) comprising a rigid carrier core (22) which is selectively encapsulated in portions by at least one rubber-elastic moulding compound (24) and is intimately connected thereto, the element being directly producible by the method according to any one of the preceding claims.

9. The orthopaedic support element (20) according to claim 8, producible without removal of foam covered portions.

10. The orthopaedic support element (20) according to claim 8 or 9, the element being an orthopaedic shoe insole.

11. An orthosis containing the orthopaedic support element (20) according to any one of claims 8 to 10.

12. A casting tool (10) for producing a semi-elastic moulded article (20) from a rigid carrier core (22) selectively encapsulated in portions by a rubber-elastic moulding compound (24), the casting tool having at least one sealing means that can be brought into contact or engagement with the carrier core (22) insertable into the casting tool to seal off a surface portion (27, 28) of the carrier core (22) against a moulding compound (24), **characterised in that** the sealing means is configured as a flexible sealing lip.

13. The casting tool according to claim 12, wherein the sealing means is a circumferential sealing lip arranged in the casting tool that can be applied in a sealing manner against the carrier core (22) insertable into the casting tool.

14. The casting tool according to claim 12, wherein the sealing means is formed by at least one groove or tongue provided in the casting tool that can be engaged sealingly with a complementary groove or tongue on the carrier core (22) insertable into the casting tool.

15. The casting tool according to any one of claims 12 to 14, wherein the casting tool additionally has means for pressing the carrier core (22) insertable into the casting tool onto the sealing means.

## Revendications

1. Procédé de fabrication d'une pièce moulée (20) partiellement élastique avec un noyau de support (22) dimensionnellement stable, le procédé comprenant les étapes suivantes :
- insérer le noyau de support (22) dans un outil de coulée ;
- introduire au moins une masse de moulage (24) plastique dans l'outil de coulée, de sorte que le noyau de support (22) est entouré par l'au moins une masse de moulage (24), et le noyau de support (22) est disposé dans l'outil de coulée de telle sorte qu'un moyen d'étanchéité associé à l'outil de coulée empêche l'au moins une masse de moulage (24) de s'écouler autour d'une partie de surface (27, 28) du noyau de support (22) ; et
- laisser durcir la masse de moulage (24) sur le noyau de support (22), de sorte qu'un noyau de support (22) qui est coulé sélectivement en sections avec la masse de moulage (24) est obtenu en tant que pièce moulée (20),
**caractérisé en ce qu'**un moyen d'étanchéité configuré sous forme de lèvre d'étanchéité dimensionnellement flexible empêche l'au moins une masse de moulage (24) de s'écouler autour d'une partie de surface (27, 28) du noyau de support (22).

2. Procédé selon la revendication 1, dans lequel une masse de moulage (24) s'écoule autour du noyau de support (22) dans une première partie de surface (26) et une autre partie de surface (28) séparée par le moyen d'étanchéité reste libre de la masse de moulage (24).

3. Procédé selon la revendication 1, dans lequel une première masse de moulage (24) s'écoule autour du noyau de support (22) dans une première partie de surface (26) et une autre masse de moulage qui diffère de la première masse de moulage (24) par ses propriétés physiques et/ou mécaniques s'écoule autour d'une autre partie de surface (27) séparée par le moyen d'étanchéité (12).

4. Procédé selon l'une quelconque des revendications 1 à 3, dans lequel la masse de moulage (24) est une mousse intégrale qui durcit en restant élastique comme du caoutchouc.

5. Procédé selon l'une quelconque des revendications 1 à 3, dans lequel la masse de moulage (24) est un élastomère non cellulaire qui durcit en restant élastique comme du caoutchouc.

6. Procédé selon l'une quelconque des revendications précédentes, dans lequel le noyau de support (22) est poussé contre le moyen d'étanchéité dans l'outil de coulée avec au moins la partie de surface (27, 28) à sceller.

7. Procédé selon la revendication 6, dans lequel la pression contre le moyen d'étanchéité s'effectue par l'application d'une pression négative entre l'outil de coulée et le noyau de support dans la région du moyen d'étanchéité.

8. Élément de support orthopédique (20) comprenant un noyau de support (22) dimensionnellement stable qui est coulée sélectivement en sections avec au moins une masse de moulage (24) élastique comme du caoutchouc et est intimement liée à celle-ci, l'élément étant produisible directement par le procédé selon l'une quelconque des revendications précédentes.

9. Élément de support orthopédique (20) selon la revendication 8, produisible sans enlever des sections entourées par mousse.

10. Élément de support orthopédique (20) selon la revendication 8 ou 9, l'élément étant une semelle intérieure orthopédique.

11. Orthèse comprenant l'élément de support orthopédique (20) selon l'une quelconque des revendications 8 à 10.

12. Outil de coulée (10) pour la fabrication d'une pièce moulée partiellement élastique (20) à partir d'un noyau de support (22) dimensionnellement stable qui est coulée sélectivement en sections avec au moins une masse de moulage (24) élastique comme du caoutchouc, l'outil de coulée ayant au moins un moyen d'étanchéité qui peut être mis en contact ou en prise avec le noyau de support (22) insérable dans l'outil de coulée de manière à sceller une partie de surface (27, 28) du noyau de support (22) contre une masse de moulage (24), **caractérisé en ce que** le moyen d'étanchéité est configuré sous forme de lèvre d'étanchéité dimensionnellement flexible.

13. Outil de coulée selon la revendication 12, le moyen d'étanchéité étant une lèvre d'étanchéité circonférentielle disposée dans l'outil de coulée qui peut être mise en appui de manière scellante contre le noyau de support (22) insérable dans l'outil de coulée.

14. Outil de coulée selon la revendication 12, dans lequel le moyen d'étanchéité est formé par au moins une rainure ou languette circonférentielle prévue dans l'outil de coulée qui peut être mise en prise de manière scellante avec une rainure ou languette complémentaire sur le noyau de support (22) insérable dans l'outil de coulée.

15. Outil de coulée selon l'une quelconque des revendications 12 à 14, l'outil de coulée en outre comprenant des moyens pour pousser le noyau de support (22) insérable dans l'outil de coulée contre le moyen d'étanchéité.
